# EUROPEAN PATENT APPLICATION

(11) **EP 3 845 357 A1**
(43) Date of publication of application: **07.07.2021**
(21) Application number: 20197757.6
(22) Date of filing: 23.09.2020
(51) Int. Cl.: B29C 44/44, B29C 44/04, B29C 44/12, B29C 44/34, B29B 7/00, B29B 7/74, C08J 9/32, B29K 23/00, B29K 75/00, B29K 105/00, B29K 105/04

(54) **MOLDING THERMAL EXPANSION STRUCTURE AND MOLDING METHOD THEREOF**

(30) Priority: 30.12.2019 TW 108148408
(71) Applicant: Feng Tay Enterprises Co., Ltd., Douliu City, Yunlin County 640 (TW)
(72) Inventor: SU, Chin-Te, 640 Douliu City, Yunlin County (TW)
(74) Representative: Melchior, Robin

(57) **Abstract**

A molding thermal expansion structure (20) includes a thermoplastic material (12) and a thermal expansion material (14), wherein the thermoplastic material (12) is 50 wt% to 90 wt% based on a weight of the molding thermal expansion structure (20); the thermal expansion material (14) is 50 wt% to 10 wt% based on a weight of the molding thermal expansion structure (20); wherein, the thermal expansion material (14) is expanded from a foaming original material through a pre-foaming process; the thermoplastic material (12) and the thermal expansion material (14) are mixed to form a mixed material (10); the mixed material (10) is thermally expanded to form the thermal expansion structure (20) in a mold (30). The molding thermal expansion structure (20) provided in the present invention could satisfy various needs of light-weighted products. A molding method of the thermal expansion structure (20) is also provided herein.

## Description

### BACKGROUND

### 1. Technical Field

The present disclosure relates generally to a molding structure, and more particularly to a molding thermal expansion structure and a molding method thereof.

### 2. Description of Related Art

As the technology develops, a range of application of using foam materials to manufacture lightweight products is wider and wider. For example, all of toys, daily commodities, and sporting goods could be made of foam materials to be lightweight products. Wherein, take sporting goods as an example, helmet linings, protective gear, midsoles, composite components can be made of foam materials.

However, the current foam materials have intrinsic specific gravity, which makes that the present products made of the current foam materials have greater specific gravities, so that the present foamed products could not satisfy some further requirements of being lightweight products.

In addition, the current foam materials have lots of limits in preparation, so that product types and design of related components made of the foam materials have significant difficulties.

In conclusion, there is a need for the manufacturers to develop a molding thermal expansion structure and a molding method thereof, which could efficiently promote production efficiency of the molding thermal expansion structure, and use the molding thermal expansion structure to manufacture products with complex structure, and decrease specific gravity of the products, whereby to satisfy requirements of being lightweight products.

### SUMMARY OF THE INVENTION

In view of the above, the primary objective of the present disclosure is to provide a molding thermal expansion structure, which includes a mixed material made by mixing a thermoplastic material and a thermal expansion material, and using a mold and a heating step, the mixed material is molded to form the thermal expansion structure. Whereby, products with more complex structures could be manufactured by molds, and after the heating step, the mixed material is heat-expanded to form the molding thermal expansion structure, in order to decrease a whole manufacturing time of a conventional foaming process. In which, the molding thermal expansion structure heat-expanded from the mixed material has the same structural shape and volume as a molding cavity of the mold.

The present disclosure provides a molding thermal expansion structure, which includes a thermoplastic material and a thermal expansion material; the thermoplastic material is in a range of 50% to 90% by weight, based on a weight of the thermal expansion structure; the thermal expansion material is in a range of 50% to 10% by weight, based on the weight of the thermal expansion structure; wherein, the thermal expansion material is formed from an expansion of a foam raw material by a pre-foaming step; the thermoplastic material and the thermal expansion material are mixed to form a mixed material, the mixed material is heated to expand, and to form the thermal expansion structure in a mold.

The other objective of the present disclosure is to provide a method for molding a thermal expansion structure, which includes at least following steps: providing a mixed material, the mixed material comprises a thermoplastic material and a thermal expansion material, the thermal expansion material is formed from an expansion of a foam raw material by a pre-foaming step; the thermoplastic material and the thermal expansion material are mixed to form the mixed material; positioning the mixed material in a mold; and heating the mixed material to expand to form the thermal expansion structure.

With the aforementioned design, the objective of the present disclosure is to provide a molding thermal expansion structure, which includes a mixed material made by mixing a thermoplastic material and a thermal expansion material, and using a mold and a heating step, the mixed material is molded to form the thermal expansion structure. Whereby, products with more complex structures could be manufactured by molds, and after the heating step, the mixed material is heat-expanded to form the molding thermal expansion structure. In which, the molding thermal expansion structure heat-expanded from the mixed material has the same structural shape and volume as a molding cavity of the mold. The molding thermal expansion structure provided in the present disclosure could satisfy various needs of lightweight products.

### BRIEF DESCRIPTION OF THE DRAWINGS

The present disclosure will be best understood by referring to the following detailed description of some illustrative embodiments in conjunction with the accompanying drawings, in which
FIG. 1 is a flow chart of the method for molding a thermal expansion structure according to one preferred embodiment of the present disclosure;
FIG. 2 is a flow chart of a front section of the method for molding a thermal expansion structure according to one preferred embodiment of the present disclosure;
FIG. 3 is flow chart of a rear section of the method for molding a thermal expansion structure according to one preferred embodiment of the present disclosure;
FIG. 4 is another flow chart of a rear section of the method for molding a thermal expansion structure according to another one preferred embodiment of the present disclosure;
FIG. 5 is a schematic diagram of the mixed material positioned in the mold according to one preferred embodiment of the present disclosure;
FIG. 6 is a schematic diagram of the mixed material in FIG. 5 which is heat-expanded to fill the whole mold, and to form the molding thermal expansion structure;
FIG. 7 is a schematic diagram of the mixed material positioned in the mold according to one preferred embodiment of the present disclosure, wherein a co-molding member has been positioned in the mold;
FIG. 8 is a schematic diagram of the mixed material in FIG. 7 which is heat-expanded to fill the whole mold, and to form the molding thermal expansion structure, wherein the heat-expanded mixed material covers the co-molding member;
FIG. 9 is a schematic diagram of the mixed material positioned in the mold according to one preferred embodiment of the present disclosure, wherein the mixed material in the mold includes a first part and a second part;
FIG. 10 is a schematic diagram of the mixed material in FIG. 9 which is heat-expanded to fill the whole mold, and to form the molding thermal expansion structure, wherein the first part of the heat-expanded mixed material has a density greater than that of the second part.

### DETAILED DESCRIPTION OF THE INVENTION

In order to illustrate the present disclosure more clearly, the preferred embodiments, and the accompanying drawings are described in detail below.

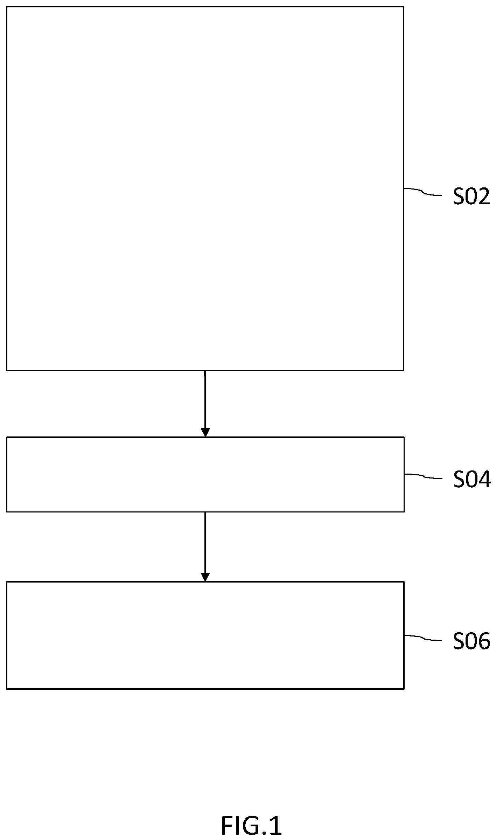

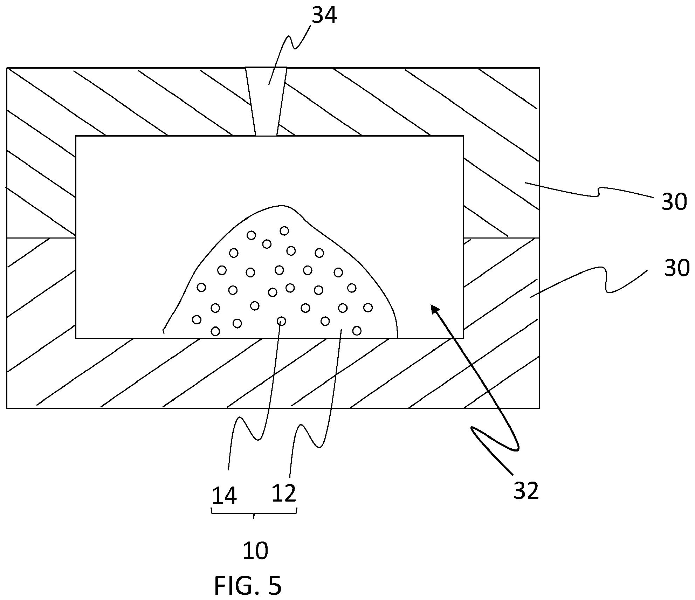

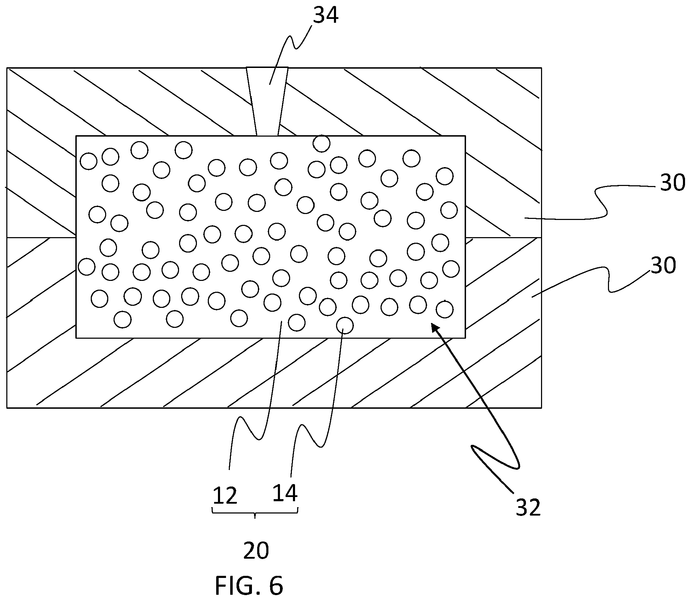

As illustrated in FIG. 1, the flow chart of the method for molding a thermal expansion structure 20 according to one preferred embodiment of the present disclosure; referring to FIG. 2, FIG. 5 and FIG. 6, FIG. 2 is a flow chart of a front section of the method for molding the thermal expansion structure 20 according to one preferred embodiment of the present disclosure; FIG. 5 is a schematic diagram of the mixed material 10 positioned in the mold 30 according to one preferred embodiment of the present disclosure; FIG. 6 is a schematic diagram of the mixed material 10 in FIG. 5 which is heat-expanded to fill the whole mold 30, and to form the molding thermal expansion structure 20.

In FIG. 1, the method for molding the thermal expansion structure 20 includes a plurality of steps as follows:
Step S02: providing the mixed material 10;
Step S04: positioning the mixed material 10 in the mold 30; and
Step S06: heating the mixed material 10 to expand to form the thermal expansion structure 20.

In Step S02, the mixed material 10 includes a thermoplastic material 12 and a thermal expansion material 14, the thermal expansion material 14 is formed from an expansion of a foam raw material (not shown) by a pre-foaming step; the thermoplastic material 12 and the thermal expansion material 14 are mixed to form the mixed material 10.

In Step S06, the thermal expansion structure 20 has a structural shape which is the same as a molding cavity 32 of the mold 30.

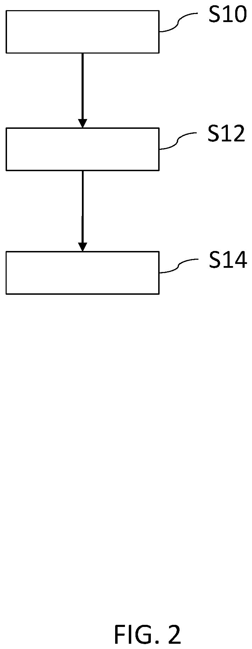

In FIG. 2, the method for molding the thermal expansion structure 20 has the front section which includes preparation (S10), kneading (S12) and granulation (S14), and the front section could be corresponding to Step S02 in FIG. 1.

In Step S10, the thermoplastic material 12 is in a range of 50% to 90% by weight, based on a weight of the thermal expansion structure 20; and the thermal expansion material 14 is in a range of 50% to 10% by weight, based on the weight of the thermal expansion structure 20.

The thermal expansion material 14 is formed from the foam raw material by the pre-foaming step, so the foam raw material is expanded to a preferred volume of the thermal expansion material 14. In one preferred embodiment of the present disclosure, a volume of the thermal expansion material 14 is 10 to 40 times of a volume of the foam raw material. In one preferred embodiment of the present disclosure, the thermal expansion material 14 includes a closed-cell foam material, wherein the closed-cell foam material includes a plurality of foamable microcapsules, such as foamable microcapsules FN-78D (produced by Matsumoto Yushi-Seiyaku Co., Ltd.). In one preferred embodiment of the present disclosure, the thermoplastic material 12 includes ethylene vinyl acetate (EVA), thermoplastic polyurethane (TPU), polypropylene (PP), thermoplastic vulcanizate (TPV) or a combination thereof, but is not limited thereto.

In Step S12, the thermoplastic material 12 and the thermal expansion material 14 are kneaded to form the mixed material 10. It is worthy to mention that, in Step 12, a kneading temperature is lower than a heat-expansion temperature of the thermal expansion material 14, but is greater than a heat deflection temperature (HDT) of the thermoplastic material 12, whereby the thermal expansion material 14 cannot be expanded during the kneading step, but the thermoplastic material 12 would be melt, so that the thermoplastic material 12 and the thermal expansion material 14 could be kneaded and mixed well. In one preferred embodiment of the present disclosure, the heat deflection temperature (HDT) of the thermoplastic material is lower than the heat expansion temperature of the thermal expansion material.

In Step S14, the mixed material 10 formed of kneading the thermoplastic material 12 and the thermal expansion material 14 could be granulated to form a plurality of particles of the mixed material 10 by a granulation apparatus (not shown). The particles of the mixed material 10 could have a preferred particle size in need, so as to provide preferred filling property of molding process, such as compression molding or injection molding, and could provide a more meticulous product appearance.

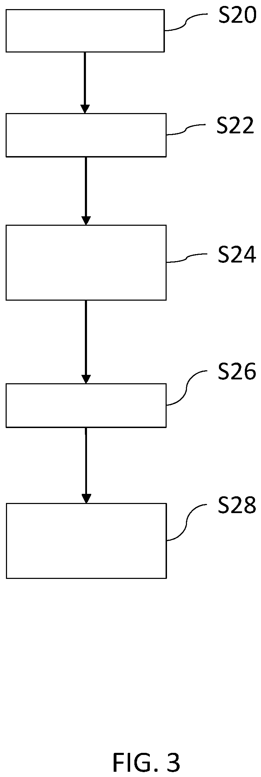

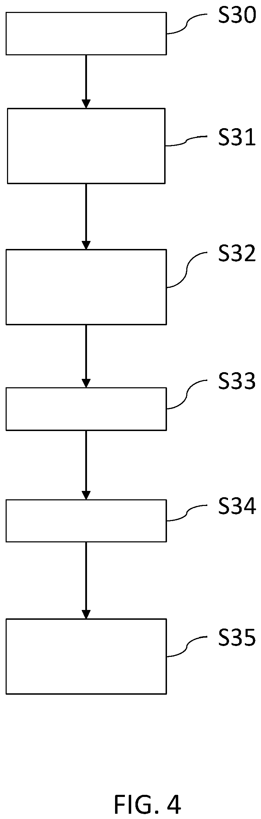

Referring to FIG. 3 and FIG. 4, FIG. 3 is flow chart of a rear section of the method for molding a thermal expansion structure according to one preferred embodiment of the present disclosure; FIG. 4 is another flow chart of a rear section of the method for molding a thermal expansion structure according to another one preferred embodiment of the present disclosure.

FIG. 3 is a process of compression molding, which includes feeding (S20), clamping (S22), heating and foaming (S24), cooling (S26), and product demolding (S28), and the process of compression molding could be corresponding to Step S04 and Step S06 in FIG. 1.

In Step S20, the volume ratio of a feeding amount of the mixed material 10 to the cavity 32 of the mold 30 is directly related to the pre-foaming expansion ratio. If the foaming ratio of the pre-foaming is higher, a further foamed extent of the mixed material 10 in the future becomes lower, so most of them can only choose a high feed proportion that accounts for the volume ratio of the mold cavity 32. If the foaming ratio of the pre-foaming is lower, the feeding amount of the mixed material 10 can be adjusted more freely according to the specific gravity designed for the thermal expansion structure 20. If it is desired that the thermal expansion structure 20 has a higher specific gravity, it is necessary to use a feeding amount of the mixed material 10 which is high-volume proportion of the mold cavity 32 to limit the subsequent foamable space. If it is desired that the thermal expansion structure 20 has a lower specific gravity, it is necessary to use a feeding amount of the mixed material 10 which is low-volume proportion of the mold cavity 32, in order to make a thermal expansion structure 20 with low specific gravity, for the space for subsequent further foaming is larger.

In addition, if the volume of the mold cavity 32 and the pre-foaming expansion ratio are fixed, when the feeding amount of the mixed material 10 is lower, the specific gravity of the thermal expansion structure 20 to be produced becomes lower, so that the thermal expansion structure 20 would be looser. Conversely, when the feeding amount of the mixed material 10 is greater, the specific gravity of the thermal expansion structure 20 becomes greater, so that the thermal expansion structure 20 would be denser. In this way, according to the specific gravity requirement of the thermal expansion structure 20, the feeding amount of the mixed material 10 could be adjusted. In the present disclosure, a volume ratio of the mixed material 10 to the thermal expansion structure 20 is in a range of 1:20 to 1:40. If it is less than 1:20, it represents the specific gravity of the thermal expansion structure 20 is higher, the thermal expansion structure 20 cannot meet lightweight requirements for products. If it is greater than 1:40, although it satisfies lightweight requirements for products, the thermal expansion structure 20 becomes looser, and mechanical properties thereof are poor, whereby to lose the value of practical application.

In Step S22, a clamping mechanism (not shown) of the mold 30 only has to provide the mold 30 with the capability of withstanding a pressure greater than that generated by the heat expansion step.

In Step S24, the mold 30 is heated such that the temperature of the cavity 32 of the mold 30 is greater than the thermal expansion temperature of the thermal expansion material 14, and the thermal expansion material 14 is heat-expanded to form the thermal expansion structure 20 together with the thermoplastic material 12.

In Step S26, the mold 30 is cooled by a general cooling method. In one preferred embodiment of the present disclosure, the temperature of the whole mold 30 is cooled below 20°C.

In Step S28, the demolding method is not limited, as long as the thermal expansion structure 20 can be completely taken out from the mold 30, for example, the demolding method can be performed manually or mechanically.

FIG. 4 is a process of injection molding, which includes feeding (S30), heating and melting (S31), mold clamping (S32), injection (S33), cooling (S34) and product demolding (S35), and the process of injection molding could be corresponding to Step S04 and Step S06 in FIG. 1.

In Step S30, the particles of the mixed material 10 having a suitable particle size are added to the feeding barrel according to actual needs.

In Step S31, the mixed material 10 is heated, so the thermoplastic material 12 of the mixed material 10 would be melted, and a temperature in Step S31 is lower than a heat-expansion temperature of the thermal expansion material 14, but is greater than a heat deflection temperature (HDT) of the thermoplastic material 12. Whereby, the thermal expansion material 14 cannot be expanded during Step S31, but the thermoplastic material 12 would be melted, so that the thermoplastic material 12 and the thermal expansion material 14 could be mixed with each other, and could be distributed evenly. In one preferred embodiment of the present disclosure, the heat deflection temperature (HDT) of the thermoplastic material 12 is lower than the heat expansion temperature of the thermal expansion material 14.

In Step S32, the clamping mechanism (not shown) of the mold 30 only has to provide the mold 30 with the capability of withstanding a pressure greater than that generated by the thermal expansion step.

In Step S33, the volume ratio of an injection amount of the molten mixed material 10 to the cavity 32 of the mold 30 is directly related to the pre-foaming expansion ratio. If the foaming ratio of the pre-foaming is higher, a further foamed extent of the mixed material 10 in the future becomes lower, so most of them can only choose a high injection proportion that accounts for the volume ratio of the mold cavity 32. If the foaming ratio of the pre-foaming is lower, the injection amount of the mixed material 10 can be adjusted more freely according to the specific gravity designed for the thermal expansion structure 20. If it is desired that the thermal expansion structure 20 has a higher specific gravity, it is necessary to use an injection amount of the mixed material 10 which is high-volume proportion of the mold cavity 32 to limit the subsequent foamable space. If it is desired that the thermal expansion structure 20 has a lower specific gravity, it is necessary to use an injection amount of the mixed material 10 which is low-volume proportion of the mold cavity 32, in order to make a thermal expansion structure 20 with low specific gravity, for the space for subsequent further foaming is larger.

In addition, if the volume of the mold cavity 32 and the pre-foaming expansion ratio are fixed, when the injection amount of the mixed material 10 is lower, the specific gravity of the thermal expansion structure 20 to be produced becomes lower, so that the thermal expansion structure 20 would be looser. Conversely, when the injection amount of the mixed material 10 is greater, the specific gravity of the thermal expansion structure 20 becomes greater, so that the thermal expansion structure 20 would be denser. In this way, according to the specific gravity requirement of the thermal expansion structure 20, the injection amount of the mixed material 10 could be adjusted. In the present disclosure, a volume ratio of the mixed material 10 to the thermal expansion structure 20 is in a range of 1:20 to 1:40. If it is less than 1:20, it represents the specific gravity of the thermal expansion structure 20 is higher, the thermal expansion structure 20 cannot meet lightweight requirements for products. If it is greater than 1:40, although it satisfies lightweight requirements for products, the thermal expansion structure 20 becomes looser, and mechanical properties thereof are poor, whereby to lose the value of practical application.

In Step S34, the mold 30 is cooled by a general cooling method. In one preferred embodiment of the present disclosure, the temperature of the whole mold 30 is cooled below 20°C.

In Step S35, the demolding method is not limited, as long as the thermal expansion structure 20 can be completely taken out from the mold 30, for example, the demolding method can be performed manually or mechanically.

In FIG. 5, the molten mixed material 10 is injected into the cavity 32 of the mold 30 through the injection port 34. Next, as shown in FIG. 6, the mold 30 is heated, and the thermal expansion material 14 of the molten mixed material 10 is thermally expanded to form the thermal expansion structure 20 that fills the entire cavity 32.

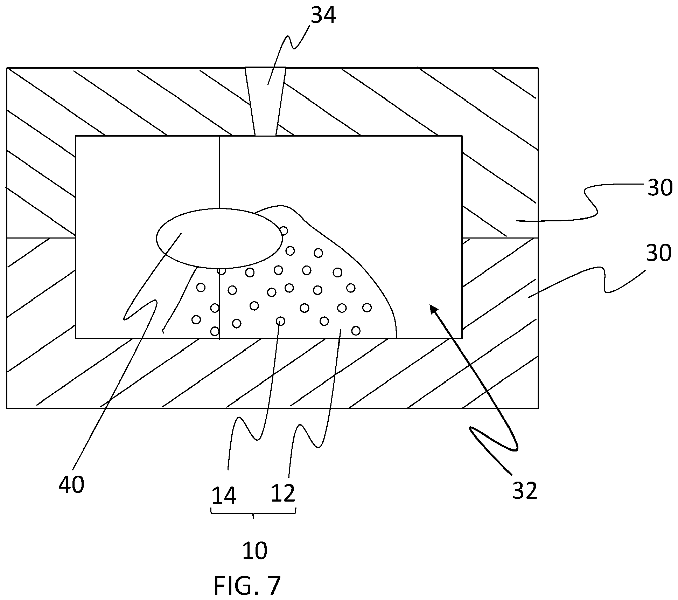

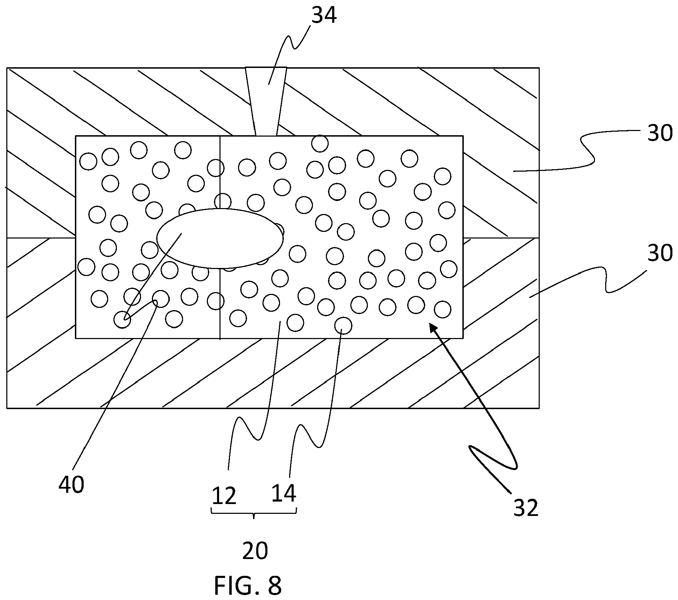

Referring to FIG. 7 and FIG. 8. In FIG. 7, before positioning the mixed material 10 in the mold 30, a co-molding member 40 has been set and fixed in the mold 30, and the molten mixed material 10 is injected into the cavity 32 of the mold 30 through the injection port 34. Next, as shown in FIG. 8, when the mixed material 10 is heated to expand, the mixed material 10 contacts the co-molding member 40 in the mold 30. In one preferred embodiment of the present disclosure, the mixed material 10 covers the co-molding member 40 in the mold 30. In another preferred embodiment of the present disclosure, the mixed material 10 contacts at least one surface of the co-molding member 40 in the mold 30, and does not completely cover the co-molding member 40.

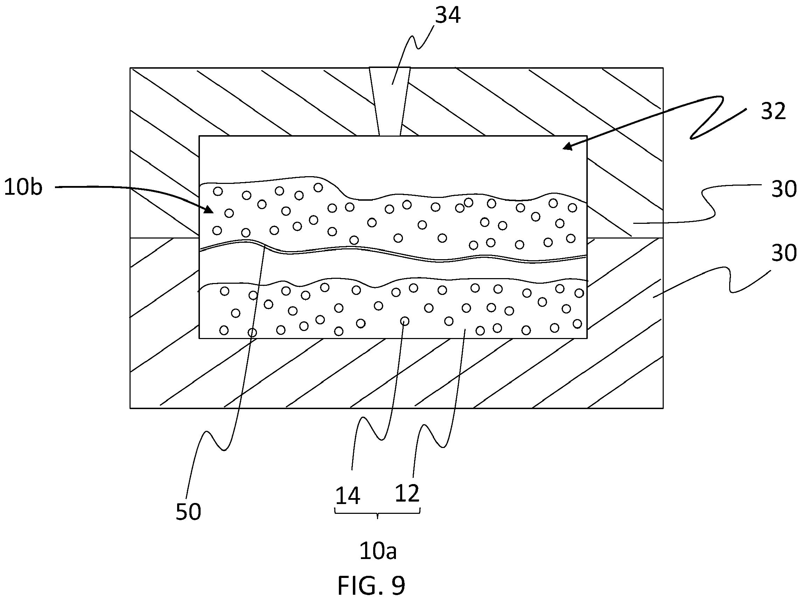

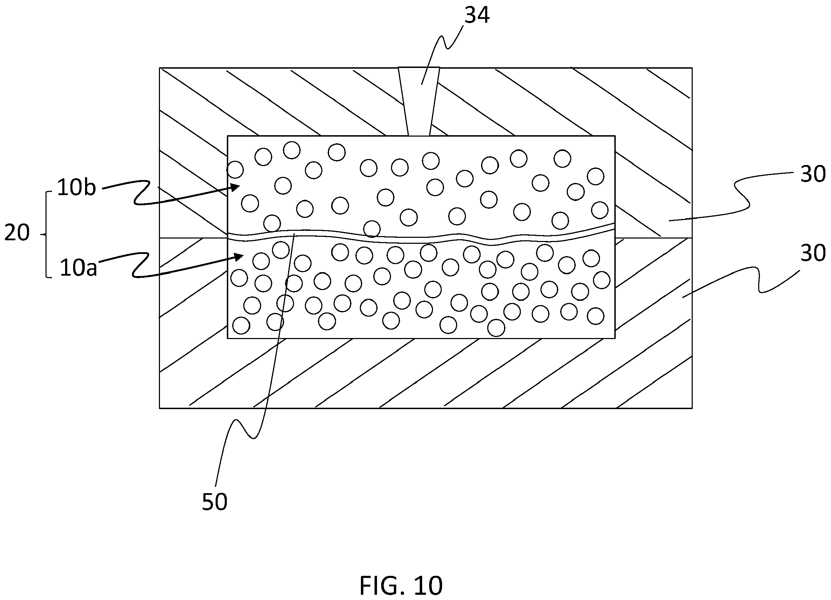

Referring to FIG. 9 and FIG. 10, the step of positioning the mixed material 10 in the mold 30 includes a first filling step and a second filling step, as shown in FIG. 9. In the first filling step, a first part 10a of the mixed material 10 is first positioned in the mold 30, and then in the second filling step, the second part 10b of the mixed material 10 is positioned in the mold 30. A feeding amount of the first part 10a and a feeding amount of the second part 10b can be adjusted according to the specific gravities design of the thermal expansion structure 20. For example, when the feeding amount of the first part 10a is greater, a foaming space becomes less, in where a region of the first part 10a could have a higher specific gravity. When the feeding amount of the second part 10b is lower, a foaming space becomes greater, in where a region of the second part 10b could have a lower specific gravity. Next, as shown in FIG. 10, after the step of heating the mixed material 10, the specific gravity of the first part 10a is greater than that of the second part 10b, so that the manufactured thermal expansion structure 20 has two different specific gravities to meet different purposes. Similarly, if it needs that the specific gravity of the first part 10a is smaller than the specific gravity of the second part 10b, the feeding amount of the first part 10a needs to be less, and the feeding amount of the second part 10b needs to be greater.

In FIG. 9 and FIG. 10, an isolation member 50 is positioned between the first part 10a and the second part 10b to isolate the first part 10a of the mixed material 10 from the second part 10b of the mixed material 10. In one preferred embodiment of the present disclosure, the isolation member 50 is thermoplastic.

In one preferred embodiment of the present disclosure, the step of positioning the mixed material 10 in a mold 30 further includes a third filling step between the first filling step and the second filling step. In the first filling step, the first part 10a of the mixed material 10 is positioned in the mold 30 first, and then, in the third filling step, a third part (not shown) of the mixed material 10 is positioned in the mold 30, and then, in the second filling step, the second part 10b of the mixed material 10 is positioned in the mold 30. After the step of heating the mixed material 10, the first part 10a, the second part 10b and the third part have different densities from each other. In one preferred embodiment of the present disclosure, the third part is positioned between the first part 10a and the second part 10b. In one preferred embodiment of the present disclosure, the first part 10a, the second part 10b and the third part are adjacent to each other.

In the embodiments of the present disclosure, a heat deflection temperature (HDT) of the thermoplastic material 12 is lower than a heat expansion temperature of the thermal expansion material 14. In the embodiments of the present disclosure, the HDT of the thermoplastic material 12 is listed as following table, but is not limited thereto.

| Types of the thermoplastic material 12 | Range of the suitable HDT (°C) |
|---|---|
| Ethylene Vinyl Acetate (EVA) | 60-80 |
| Thermoplastic Polyurethane (TPU) | 60-100 |
| Polypropylene (PP) | 60-105 |
| Thermoplastic Vulcanizate (TPV) | 60-100 |

With the aforementioned design, the molding thermal expansion structure includes the mixed material made by mixing the thermoplastic material and the thermal expansion material; wherein, the thermal expansion material is formed from an expansion of the foam raw material by the pre-foaming step. And using a mold and a heating step, the mixed material is molded to form the thermal expansion structure. With the aforementioned method, the present foamed products could satisfy various needs of lightweight products, and the freedom of designing specific gravity of products is greater.

It must be pointed out that the embodiments described above are only some preferred embodiments of the present disclosure. All equivalent structures which employ the concepts disclosed in this specification and the appended claims should fall within the scope of the present disclosure.

**LIST OF REFERENCE NUMERALS**

| | |
|---|---|
| S02 | providing a mixed material, the mixed material comprises a thermoplastic material and a thermal expansion material, the thermal expansion material is formed from an expansion of a foam raw material by a prefoaming step; the thermoplastic material and the thermal expansion material are mixed to form the mixed material |
| S04 ; | positioning the mixed material in a mold |
| S06 | heating the mixed material to expand to form the thermal expansion structure |
| S10 | preparation |
| S12 | kneading |
| S14 | granulation |
| S20 | feeding |
| S22 | clamping |
| S24 | heating and foaming |
| S26 | cooling |
| S28 | product demolding |
| S30 | feeding |
| S31 | heating and melting |
| S32 | mold clamping |
| S33 | injection |
| S34 | cooling |
| S35 | product demolding |

## Claims

1. A molding thermal expansion structure (20), comprising:
50% to 90% by weight of a thermoplastic material (12) based on a weight of the thermal expansion structure (20); and
50% to 10% by weight of a thermal expansion material (14) based on the weight of the thermal expansion structure (20);
wherein, the thermal expansion material (14) is formed from an expansion of a foam raw material by a pre-foaming step; the thermoplastic material (12) and the thermal expansion material (14) are mixed to form a mixed material (10), the mixed material (10) is heated to expand, and to form the thermal expansion structure (20) in a mold (30) .

2. The molding thermal expansion structure of claim 1, wherein a volume of the thermal expansion material (14) is 10 to 40 times of a volume of the foam raw material.

3. The molding thermal expansion structure of claim 1, wherein the thermoplastic material (12) comprises ethylene vinyl acetate (EVA), thermoplastic polyurethane (TPU), polypropylene (PP), thermoplastic vulcanizate (TPV) or a combination thereof.

4. The molding thermal expansion structure of claim 1, wherein the thermal expansion material (14) comprises a closed-cell foam material which comprises a plurality of foamable microcapsules.

5. The molding thermal expansion structure of claim 1, wherein a heat deflection temperature (HDT) of the thermoplastic material (12) is lower than a heat expansion temperature of the thermal expansion material (14).

6. The molding thermal expansion structure of claim 1, comprising a co-molding member (40) positioned in the mold (30); when the mixed material (10) is positioned in the mold (30), and is heated to expand, the heat-expanded mixed material contacts the co-molding member (40) in the mold (30).

7. The molding thermal expansion structure of claim 1, wherein the mixed material (10) in the mold (30) comprises a first part (10a) and a second part (10b); after the mixed material (10) is heated to expand, a density of the first part (10a) is different from that of the second part (10b).

8. The molding thermal expansion structure of claim 7, comprising a thermoplastic isolation member (50) positioned between the first part (10a) and the second part (10b), in order to isolate the first part (10a) of the mixed material (10) from the second part (10b) thereof.

9. The molding thermal expansion structure of claim 7, wherein the mixed material (10) in the mold (30) further comprises a third part; after the mixed material (10) is heated to expand, the first part (10a), the second part (10b) and the third part have different densities from each other.

10. A method for molding a thermal expansion structure (20), comprising:
providing a mixed material (10), the mixed material (10) comprises a thermoplastic material (12) and a thermal expansion material (14), the thermal expansion material (14) is formed from an expansion of a foam raw material by a pre-foaming step; the thermoplastic material (12) and the thermal expansion material (14) are mixed to form the mixed material (10);
positioning the mixed material (10) in a mold (30); and
heating the mixed material (10) to expand to form the thermal expansion structure (20).

11. The method for molding the thermal expansion structure of claim 10, wherein based on a weight of the thermal expansion structure (20), the thermoplastic material (12) is in a range of 50% to 90% by weight, the thermal expansion material (14) is in a range of 50% to 10% by weight.

12. The method for molding the thermal expansion structure of claim 10, wherein a heat deflection temperature (HDT) of the thermoplastic material (12) is lower than a heat expansion temperature of the thermal expansion material (14).

13. The method for molding the thermal expansion structure of claim 10, wherein the step of positioning the mixed material (10) in a mold (30) comprises a first filling step and a second filling step; in the first filling step, a first part (10a) of the mixed material (10) is positioned in the mold (30) first, and then, in the second filling step, a second part (10b) of the mixed material (10) is positioned in the mold (30); after the step of heating the mixed material (10), a density of the first part (10a) is different from that of the second part (10b).

14. The method for molding the thermal expansion structure of claim 13, comprising positioning a thermoplastic isolation member (50) between the first part (10a) and the second part (10b), in order to isolate the first part (10a) of the mixed material (10) from the second part (10b) thereof.

15. The method for molding the thermal expansion structure of claim 13, wherein the step of positioning the mixed material (10) in a mold (30) further comprises a third filling step between the first filling step and the second filling step; in the first filling step, the first part (10a) of the mixed material (10) is positioned in the mold (30) first, and then, in the third filling step, a third part of the mixed material (10) is positioned in the mold (30), and then, in the second filling step, the second part (10b) of the mixed material (10) is positioned in the mold (30); after the step of heating the mixed material (10), the first part (10a), the second part (10b) and the third part have different densities from each other.
